# EUROPEAN PATENT APPLICATION

(11) **EP 1 247 712 A1**
(43) Date of publication of application: **09.10.2002**
(21) Application number: 02380073.3
(22) Date of filing: 03.04.2002
(51) Int. Cl.: B60V 1/08, B60V 1/22, B60V 3/08

(54) **Ground effect vehicle**

(30) Priority: 06.04.2001 ES 200100819
(71) Applicant: Gamesa Desarrollos Aeronauticos, S.A. (Sociedad Unipersonal), 01510 Minano (Alava) (ES)
(72) Inventor: Munoz de Felipe, Pedro Josè, 01510 Minano (Alavo) (ES); Cunha da Costa Sa, Jose Ricardo, 01510 Minano (Alavo) (ES)

(57) **Abstract**

Ground effect vehicle comprising fuselage, which ends in a T-shaped empennage, which in turns includes a motor plant for the flight, two floats, two wings each divided into a central part disposed between the fuselage and a float, two exterior parts, outward from the floats, and having end plates. It has surface areas similar to flaps in its leading and trailing edges of the central part and surface variation devices.

The vehicle works by taking off on an air cushion pad, so that it later on performs a flight transition in ground effect with variation in the wing surface.

## Description

### TECHNICAL FIELD

The current invention relates, as its own name gives away, to a vehicle that uses an air cushion pad for the take off. The cruise phase consists of the conventional flight performed at a low height within the ground effect, with the transition intervals in which the wing surface can vary with some retractable plates. In order to take off on the cushion air, several blowing engines are moved by auxiliary engines allocated in the central wing. The interior faces of the two floats, along with the similar to flaps hinged surfaces allocated close to the leading and Trailing edge of the central part of the wind, configure the volume within which the buffer air pressure created by the blower, increases up to the point to allow the take off on water surfaces clearance for aircrafts.

### PRIOR ART

The previews and patents already existing in the prior art are multiple and vary within a wide range, being specially remarkable the following ground effect vehicles.

US4.442.986 Patent Number because of its "Extensible Leading edge for vehicle of ground effect flight" instigates a great monocoque body, with wings finished in wings plates, thrust motors and a "T" like stabilizer in the afterbody; wings also incorporate an intermediate groove all along the wing that may or may not incorporate cutting fins used like a filter and a slanted Trailing edge, focused on encouraging the ground effect. The main disadvantage regarding the previously mentioned vehicle is the fact that having a monocoque structure makes it unable to take off on water when effecting conventional flights because of the strong friction it provokes and the power required in order to obtain sustentation.

The patent PCTWO09954181 for the "Aeroplane Creation Method with a conventional propulsion and ground effect" instigates a fuselage that incorporates a passenger compartment, foil borne with stabilizers, flaps, rudder and gas motors; these vehicles take off and land in poor quality aerodromes, they can fly on ground effect and coasting flights, they provide extra modules for the passage in the tips of the wings and create an static air cushion underneath the wings by means of great size blowers. The main disadvantage for this type of vehicles is its big size comparing to the delayed/fallen behind wings and their small size, that is why its sustentation in coasting flight will have to make up for great requirements. To the previously mentioned disadvantages it should be included the fact that the central body of the vehicle regarding the current invention is not in touch with water, giving the fact that the ground effect take place between the skates or lateral floats, not including the central hull as it happens with the previously mentioned pattern.

The patent PCT WO9324366 for "Flying Vehicle", introduces an aircraft with short wingspread shape fuselage and thick section, being able to flight with and without ground effect, to take off and land in poor quality aerodromes; it also incorporates turbo injection engines provided with exit slices and eyelid reverse, in the same way that it also incorporates tilting floats, a pair of control surfaces similar to wings, in its inferior part some rotary aerofoil that makes the most of/favours the cushion. First of all, it is lifted by the engines thrust reverser and the inferior fins, afterward it reaches speed and achieving its lift, closing finally its fins and flights without ground effect. The procedure is overturned/inverted in order to land. The main disadvantage can be focused on its complexity and dimensions of the engines required for its elevation and flight, as well as its peculiar structural design.

The patent PCT WO91073300 for "Ground Effect Vehicle", accomplishes a compartment installed on the floats, wings at both sides with the retention camera, thrust engines connected to the wings in order to provide propulsion and lift gain, plates at the edges of the wing common float shaped allocated in the same direction as the progression and staggered in order to improve the slide behaviour, lateral and parallel to the main rudder stabilizers for manoeuvrability that can be lowered as well, as performing as rudder. The main disadvantage is the power required to take off the monocasque block overcoming the adherence opposed by the water.

Bearing in mind that the control of the boundary level suctioning air out of the air flow of the wall, is concept included in the prior art, only being distinguishable by its shape and the procedure of performing the air suction, for instance, by an engine with an propeller allocated in the interior of the wing, hereinafter a number of distinguishable characteristic will be stated in order to establish the differences with the previously mentioned patents in the technical field. The substantial differences are not only due to its external shape, the layout of is blowers between the floats and the hull, the thrust engines used, the layout of the passage, the freight in the interior hull and the access to the vehicle; but the differences existing in the running of the front and rear plates disposed by way of flaps, the reduction in the wing area and the closure of the blowers. A part from its structural characteristics, the way of flight of the aircraft with its strategic transition points in the take off and landing can also be taken for reivindicable ones.

### DISCLOUSURE OF THE INVENTION

The ground and conventional flight effect combined vehicle described in the technical field, is formed by a central body where the large fuselage is included with freight and passengers compartment, wings ended in a marginal end plate, both floats parallely displayed to the hull and transversely to the wing, and finally a "T" like stabiliser. The vehicle propulsion is provided by an engine lined up to the horizontal stabiliser, integrated in the vertical empennage, the previously mentioned engine is a turboprop that activates the contra-rotating propeller.

The fuselage is divided into 2 parts, being the inferior part assigned to the transport of freight, including vehicles and standardised containers, and the superior part for the transport of passengers and crew, arranged/accommodated in their respective seats. The vehicles and the freight are embarked through the gate allocated in the stern of the aircraft by means of using a rolling mat mechanic system. The gate is about/formed by* a collapsible door outward the exterior so that the interior part of the door, in its open position and flattened down, stands for a gangplank between the interior of the fuselage and the wharf. The access for passengers, crew, and the flight personnel is via the lateral doors allocated in the left side of the fuselage, the freight doors are allocated in the right side, in order to access to the central part of the cellar. The crew compartment /cockpit is "nose down" like and it is allocated in the prow of the aircraft. The incorporation of several access doors which in turns provide more flexibility regarding to the configuration of a unique ramp of embarkation. Thanks to the versatility of the vehicle the necessity of infrastructure is cut down to a minimum level only requiring the creation of floating pantoons the incorporate berthing mechanisms pliers for passengers and freight.

The vehicle has a low wing configuration, with wings without arrow in the central part as well as the exterior ones. The floats are symmetric regarding to the longitudinal axle of the aircraft and they divide the wing in a central leg and two external legs. The external wings have marginal ending plates that are extended downwards and ailerons for the lateral control of the aircraft. The floats lodge in their interior the auxiliary motors in charge of activating the blowers in order to generate the air cushion and the fuel.

Bearing in mind all the previously mentioned, the following advantages can be deducted for the combined vehicle of ground effect and conventional flight. The take off is carried out on an air cushion, what makes the hydro-dynamic resistance be reduced in such a way that it is possible to accelerate up to a transition speed in ground effect flights, in a short period of time and space. Having reached this, the aircraft increases its flight height so that the air cushion stops gradually being effective until the aircraft can sustain itself only aerodynamically. The flaps are shut and the blowers are switched off, starting the cruiser flight phase. In this phase, the wing area is decreased so that a high cruiser speed is possible. The cruiser flight is carried out in ground effect, with a UD relation, (sustentation/resistance) allowing an energetically more effective operation than the one of a current transport airplane, being able in the same way to fly and maneuvre out of the ground effect like a conventional airplane. In case of freak or unfavourable sea conditions, or in presence of obstacles, the vehicle will be able to operate at a slightly higher speed than the cruise speed, therefore with a minor ground effect as well as a minor L/D relation, but at the same time with more security and safety.

In order to the explanation more comprehensible, enclosed you will find a drawing sheet in which a practical case of the scope of realization of the current inventions has been represented. In this case, the features/contributions of the aircraft would allow to transport 30 tons of useful freight between seaports or limnic up to a distance of 1000Km and at a cruise speed of 540Km./h.

### BRIEF DRESCRIPTION OF THE DRAWINGS

Figure nº 1 is a perspective view that briefly shows the combined vehicle in cruise flight disposition, taking full advantage of the ground effect achieved between the floats.

Figure nº 2 is formed by two ground views, the first of them with its active blowers and the retractable plates that widens the extended wing area, and the second view represents the mentioned gathered plates adjusting the central wing in cruise position.

Figure nº 4 represents several views cut from the central part of the wing profile, where the transition to the cruise phase is staggerly / gradually shown, being carried out by the movement of the flaps which together with the floats, close the volume where the air cushion takes place.

Figure nº 4 shows a detailed view of the perspective of a wing displayed in cruise situation, allowing a very easy appreciation of the shape and disposition of the float, the allocation of the fuselage strut, wing profile, etc.

Figure nº 5 represents an overall view of the vehicle docked in a wharf, showing the lateral accesses and the back platform in its open display.

Figure nº 6 represents a possible transversal section of the fuselage showing the interior display for both passage and freight.

Figure nº 7 shows a perspective view of the vehicle of the invention where is shown the aircraft in flight display with its extended flaps and flat surfaces like extended flaps in working display/position.

### DESCRIPTION OF THE PREFERRED EMBODIMENT

As you can see from figures nº 1, 2 and 7, combined vehicle of ground effect and conventional flight being described in the technical field is formed by a central monocoque body where the following are included: a "nose down" like crew compartment/cockpit (1), the large fuselage (2), the wings (3) finished in marginal ending plates (4), floats (5) parallely displayed to the fuselage (2) and transversally to the wings (3), and finally, horizontal stabilizer/empennage* "T" like tail. The engine (7) is aligned with the horizontal stabilizer (8), integrated in the vertical empennage (9). The vehicle has a low wing configuration, without date.

The floats (5) are symmetric regarding to the longitudinal axle of the aircraft and they are flat in its interior side and curved in convex shape, with sharp tip and final extreme, in the external side. Its base is curved in concave-convex shape, with a step (28). The Floats (5) completely integrated in the final extreme of the wing (3) and in the intermediate part (10), allocates in is interior auxiliary motors in charge of activating the blowers (11) and the fuel. The exterior wings (3) represent flaps (12) susceptible of being used as ailerons for lateral control.

As can be seen in figure nº 3, the procedure to follow in the take off run are the following: first of all an air cushion is created activating the blower (11) within a close volume for the interior side of the floats (5) by some retractable plates (13) that are extended at the same level that the central wing (10), from the leading and trailing edge until the fuselage strut (14) which are allocated in the front part of the skate (5) and in the final extreme of it. The mentioned air cushion is complemented with 2 flat surfaces similar to flaps (15) hinged on one of its extremes and is located in the leading and trailing edges of the central part of the wing (10). Once the take off speed has been reached, the transition to the cruise phase takes places. The increment on the sustentation with the speed makes the flight height increase too, so that the air cushion starts loosing effectiveness. The air cushion is activated by the closure of the leading and trailing flaps (15). These flaps initially rotate by being separated of the soffit/intrados of the wing so that a stream is created above it so that the central wing happens to produce aerodynamic sustentation. With it, the vehicle will ascend up to a safety altitude, switching off the blowers (11) and closing first of all the exit areas (16) and the entrance area later on (17). The Flaps (15) are finally closed by moving parallely at intrados, as can be seen in the detailed figure nº 4.

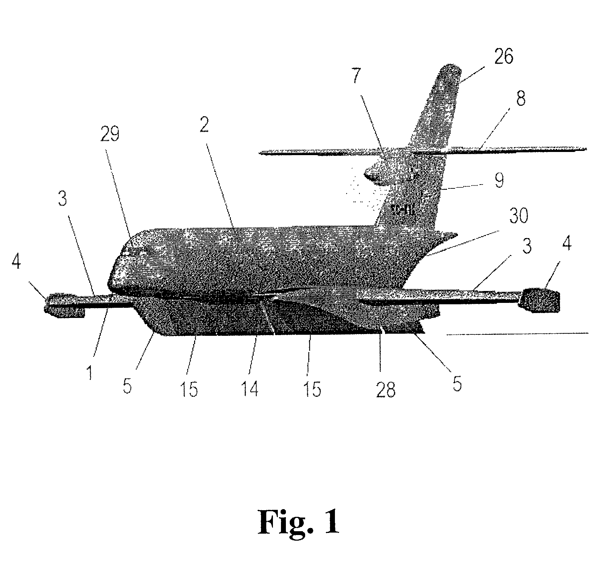

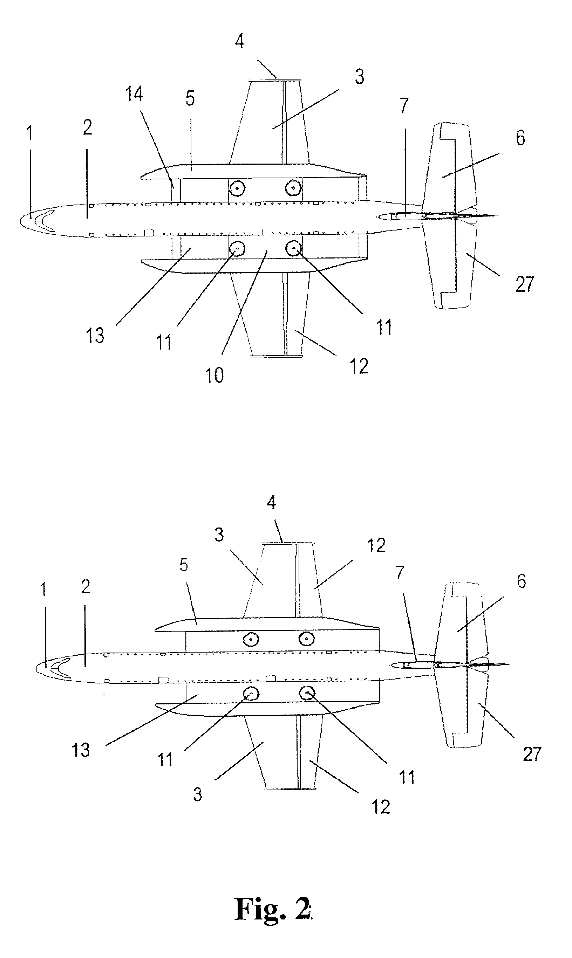

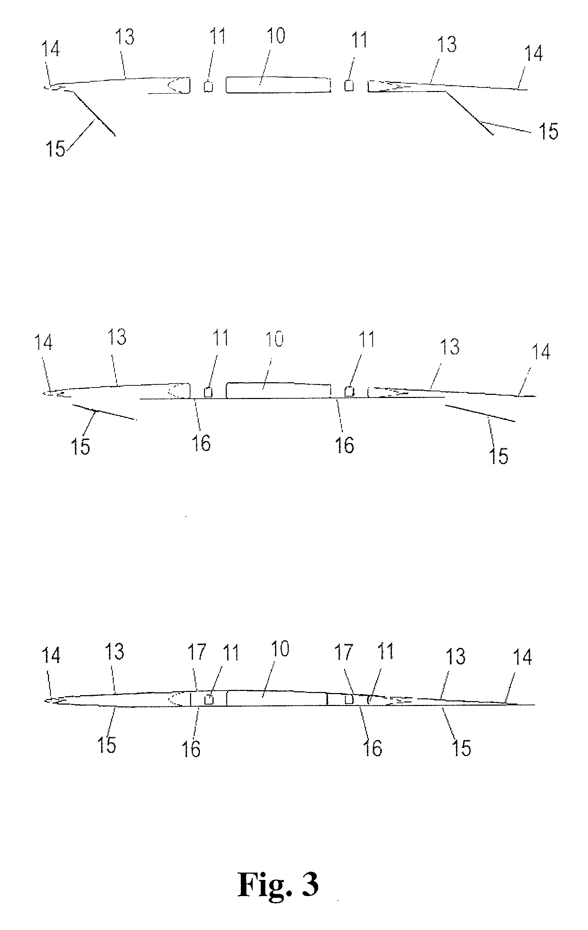

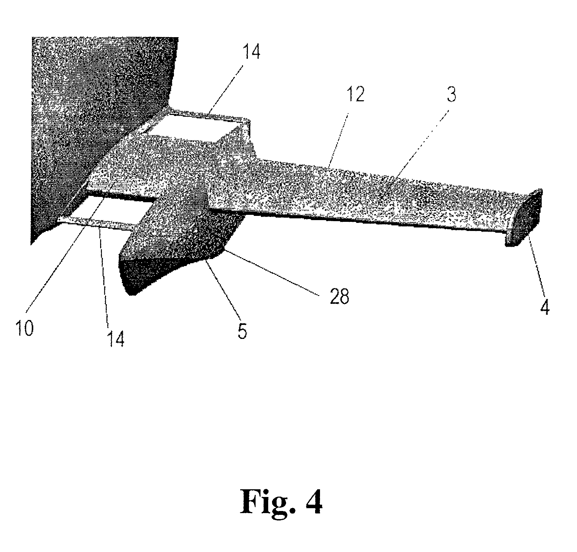

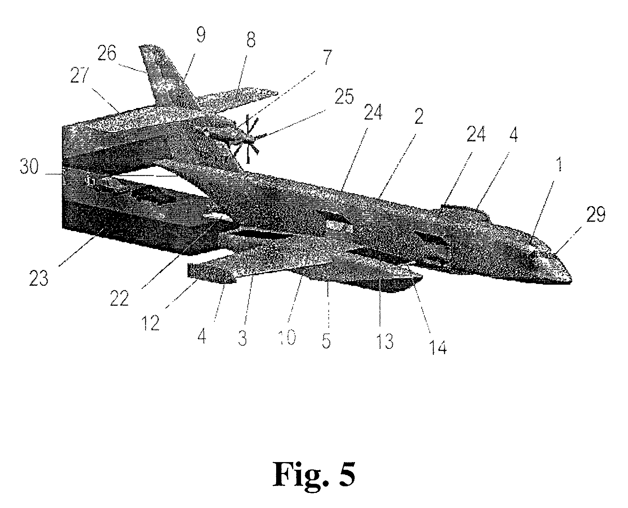

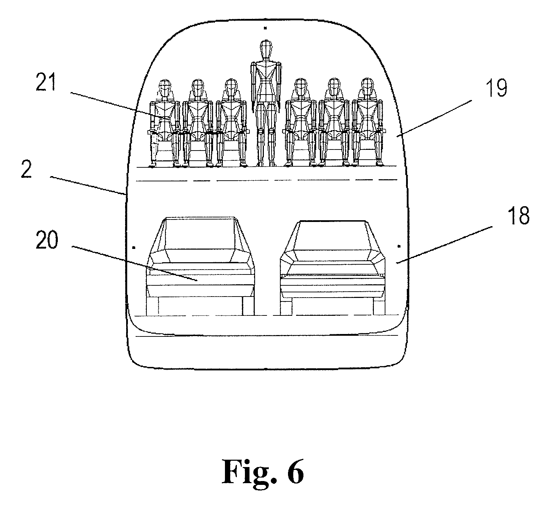

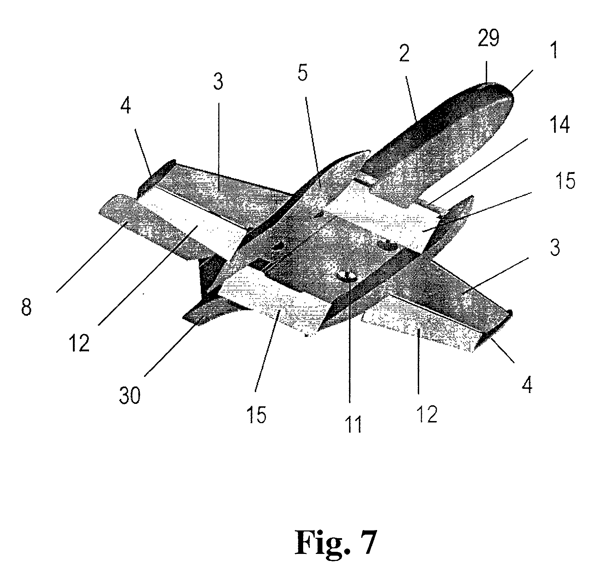

In figures n° 5 and 6º the existing exterior accesses are shown as well as the interior of the aircraft. The fuselage (2) is divided in two levels, with the inferior part (18) assigned to the transport of freight, including cars (20) and standardised containers, and the superior part (19) for the transport of passengers (21) and crew (29), arranged/accommodated in their respective seats. The vehicles (20) and the freight is embarked through the gate allocated in the stern (22) that stands for a gangplank between the interior of the fuselage (2) and the wharf (23). The access for passengers (21), crew (29) and the flight personnel is via the lateral doors allocated in the left side of the fuselage (not shown in the figure) at the freight doors are allocated in the right side, in order to access to the central part of the cellar (18) being a collapsible door outward the exterior by rotating around its superior extreme.

As it has been previously mentioned, the engine (7) is allocated in the cruciform empennage (6) and it is formed by a turboprop that activates a doublet of contra-rotating propellers (25). The vertical empennage incorporates the corresponding direction rudders (26) and the horizontal empennage (8) incorporates its corresponding depth rudders (27) establishing all of it on the concave stern of the vehicle, which in turns keeps on decreasing and sharpening in shape gradually.

## Claims

1. Combined vehicle of ground effect and conventional flight, which comprehends an enlarged fuselage, a power system integrated in the vertical empennage, two floats, and two wings finished in marginal ending plates and in which in its central part the blowers are included, is characterized because of:
a) The fuselage is a monocoque body,
b) The empennage is cruciform, "T" Like, and includes an engine, a depth rudder and horizontal stabilizers,
c) The wings display and complies a low wing aircraft, with its wings going through the floats and up to the union with the fuselage,
d) The floats are symmetric regarding to the longitudinal axle of the aircraft, flat in the internal side and curved in convex shape for the exterior, its edges and extremes are perfected and its base is curved in concave-convex shape, with an intermediate step in the convex base.
e) The central part of the wing comprehends an intermediate body where the following items are located: two blowers, a fuselage strut that forms the leading edge and a second fuselage strut that forms the Trailing edge, both of them displayed between the internal part of the skate and the exterior lateral of the fuselage.

2. Combined vehicle according to claim nº 1, characterized for creating an air cushion before taking off which is due to the four blowers included in the intermediate parts of the wing and for the disposition of the retractable flaps that are expanded at the same level of the central wing, from the fuselage struts that form the Trailing and Leading edge, covering from the fuselage until the internal face of the skate, being complemented by two hinged flaps in one of its edges and displayed in the intrados of the assembly resulting of the central wing and the retractable plates in extended disposition.

3. Combined vehicle according to reivindication nº 2, characterized because while the take off run takes place, the air cushion remains close by its internal face by the leaning the flaps toward the water surface, having reached the take off speed, a transition to the cruise phase takes place, disabling the air cushion by the gradual closure of the flaps that initially rotates separating of the intrados, increasing the total aerodynamic sustentation and elevating the aircraft up to a safety altitude, the blowers are switched off by firstly closing its exit surface and its entrance one later on, the plates finally close and at the end, the central wing area is reduced by gradually moving backwards the retractable plates until the cruise speed and altitude are reached, lowering the altitude of operation in ground effect.

4. Combined vehicle according to reivindication nº 1, characterized because of its inferior area located right in the middle of the fuselage is flat in order to configure the volume of the air cushion as well as locate the retractable plates of the central wing in the inside.

5. Combined vehicle according to reivindication nº 1, characterized because of its motor, which is formed by a turboprop that activates the contra-rotating propeller and is aligned to horizontal stabilizer, displayed out of the ground effect and integrated in the vertical empennage

6. Combined vehicle according to reivindication nº 1, characterized because of its floats which are completely integrated in the wing and allocated in its interior the auxiliary engines that action the blowers and the fuel.
